# EUROPÄISCHE PATENTANMELDUNG

(11) **EP 4 001 832 A1**
(43) Veröffentlichungstag der Anmeldung: **25.05.2022**
(21) Anmeldenummer: 20207008.2
(22) Anmeldetag: 11.11.2020
(51) Int. Cl.: G01B 11/02

(54) **VERFAHREN ZUM VERMESSEN EINES RAHMENFÖRMIGEN OBJEKTES**

(71) Anmelder: Giger, Mike, 7013 Domat/Ems (CH); Meyer, Mirko, 7013 Domat/Ems (CH)
(72) Erfinder: Giger, Mike, 7013 Domat/Ems (CH); Meyer, Mirko, 7013 Domat/Ems (CH)
(74) Vertreter: PATERIS Patentanwälte PartmbB

(57) **Zusammenfassung**

Die Erfindung betrifft ein Verfahren zum Vermessen eines rahmenförmigen Objektes (4), mit den Schritten:
(S100) Erzeugen zumindest einer das rahmenförmige Objekt (4) schneidenden, optisch sichtbaren Referenzlinie (L1, L2),
(S300) Ausrichten eines Distanzmessers (8) an der zumindest einen Referenzlinie (L1, L2),
(S400) Bestimmen einer Mehrzahl von Messwerten (M1.1, M1.2, M2.1, M2.2, M3.1, M3.2, M4.1, M4.2) mit dem Distanzmesser (8),
(S500) Zusammenfassen der Mehrzahl von Messwerten (M1.1, M1.2, M2.1, M2.2, M3.1, M3.2, M4.1, M4.2) zu einem Messdatensatz (MDS).

## Beschreibung

Die Erfindung betrifft ein Verfahren zum Vermessen eines rahmenförmigen Objektes.

Häufig ergibt sich das Problem, dass auf einer Baustelle ein rahmenförmiges Objekt, wie z.B. ein rechteckförmiger Rahmen, von seiner Idealform mehr oder weniger abweicht. Dies erfordert ein exaktes Vermessen des rahmenförmigen Objektes um seine tatsächliche Form bzw. seine tatsächlichen Abmessungen zu bestimmen.

Es sind Distanzmessgeräte zur kontaktlosen Distanzmessung bekannt. Sie beruhen z.B. auf einer elektrooptischen Entfernungsmessung (auch Abstands-Distanzmessung) oder Laserentfernungsmessung zur elektronischen Entfernungsmessung (EDM) anhand von z.B. Laufzeitmessungen, Phasenlagemessungen oder Lasertriangulation von Licht, zumeist Laser. Ein derartiges Laserdistanzmessgerät ist z.B. aus der DE 10 2007 038 528 A1 bekannt.

Ferner sind Linienlaser bekannt, z.B. aus der DE 10 2009 001 884 A1. Ein Linienlaser ist ein Laser mit einer speziellen Optik, mit der statt eines Punktes (wie beim Laserpointer) eine Linie erzeugt wird. Mittels derartiger Laser können Projektionen einzelner Linien und auch Mehrfachlinien erzeugt werden. Während für Einzellinien refraktive Optik verwendet werden (Powell-Linsen, Zylinderlinsen), ermöglichen diffraktive optische Elemente in Kombination mit Powell-Linsen die Projektion von Mehrfachlinien. Ein als Kreuzlaser ausgebildeter Linienlaser erzeugt zwei Referenzlinien, die rechtwinklig zueinander angeordnet sind und daher ein Laserkreuz bilden. Mit anderen Worten, verschiedene Optiken erzeugen je nach Anwendungsfall Linien, Kreuze oder auch andere Muster. Im Bauwesen werden derartige Linienlaser verwendet, um horizontale und/oder vertikale Referenzlinien zu erzeugen, mit denen die Durchführung von Vermessungsaufgaben erleichtern.

Allerdings unterstützen diese Geräte einen Nutzer nur bei der Aufnahme einzelner Messwerte, die jedoch Abweichungen des rahmenförmigen Objektes von seiner Idealform nicht vollständig beschreiben.

Es besteht also Bedarf daran, Wege aufzuzeigen, wie ein Vermessen eines rahmenförmigen Objektes vereinfacht werden kann.

Die Aufgabe der Erfindung wird gelöst durch ein Verfahren zum Vermessen eines rahmenförmigen Objektes, mit den Schritten:
Erzeugen zumindest einer das rahmenförmige Objekt schneidenden, optisch sichtbaren Referenzlinie,
Ausrichten eines Distanzmessers an der zumindest einen Referenzlinie,
Bestimmen einer Mehrzahl von Messwerten mit dem Distanzmesser,
Zusammenfassen der Mehrzahl von Messwerten zu einem Messdatensatz.

Die zumindest eine Referenzlinie oder ein Laserkreuz, bestehend aus zwei sich kreuzenden Referenzlinien, wird mittels eines Lasers, wie einem Linien- oder Kreuzlaser erzeugt. Dabei emittiert der Laser Laserlicht im sichtbaren Wellenlängenbereich, sodass die zumindest eine Referenzlinie oder das Laserkreuz für einen Nutzer unmittelbar optisch sichtbar ist.

Dabei werden die zumindest eine Referenzlinie oder das Laserkreuz derart angeordnet, dass die zumindest eine Referenzlinie das rahmenförmige Objekt in zwei Teile bzw. das Laserkreuz das rahmenförmige Objekt in vier Teile teilt. D.h., eine erste Referenzlinie teilt das rahmenförmige Objekt in einen oberen und eine unteren Teil, während eine zweite Referenzlinie das rahmenförmige Objekt in einen rechten und einen linken Teil teilt.

Die zumindest eine Referenzlinie oder das Laserkreuz wird dann verwendet, um den Distanzmesser auszurichten und nach jedem Ausrichten einen Messwert mit dem Distanzmesser zu bestimmen. Das Ausrichten des Distanzmessers und das Bestimmen der Messwerte mit dem Distanzmesser wird dabei solange wiederholt, bis die erforderlich Anzahl von Messwerten für den Messdatensatz vorliegen.

Dabei wird der Distanzmesser an der zumindest einen Referenzlinie derart ausgerichtet, dass der jeweilige Messwert repräsentativ für eine Distanz von der zur Ausrichtung verwendeten Referenzlinie bis zu einem als Messpunkt dienenden Abschnitt des rahmenförmigen Objektes ist.

Mit anderen Worten, es werden die zumindest eine Referenzlinie oder das Laserkreuz als Ausrichthilfsmittel zum Ausrichten des Distanzmessers verwendet, um eine Mehrzahl von Messwerten mit dem Distanzmesser zu bestimmen, die einen gemeinsamen Bezugspunkt haben und daher problemlos zu einem Messdatensatz zusammengefasst werden können.

So kann ein Vermessen eines rahmenförmigen Objektes, das von seiner Idealform abweicht, deutlich vereinfacht werden.

Gemäß einer Ausführungsform wird zum Ausrichten eines Distanzmessers an der zumindest einen Referenzlinie eine Positioniereinrichtung des Distanzmessers verwendet. Mit anderen Worten, der Distanzmesser weist eine Positioniereinrichtung auf, die ein Ausrichten des Distanzmessers erlaubt oder erleichtert. Die Positioniereinrichtung kann eine linienförmige Aussparung oder Vertiefung sein, die zur Deckung mit einer der Referenzlinien gebracht werden kann, um den Distanzmesser auszurichten. Ferner kann die Positioniereinrichtung auch einen oder mehrere Sensoren zur Laserlichtdetektion aufweisen und erfassen, wenn die Positioniereinrichtung zur Deckung mit einer der Referenzlinien gebracht wurde. Zusätzlich kann vorgesehen sein, dass der Distanzmesser auf ein erfasstes zur Deckung bringen hin ein Hinweissignal für den Nutzer erzeugt. Das Hinweissignal kann den Nutzer auf akustischem und/oder optischem und/oder haptischem Wege über das erfolgreiche zur Deckung bringen informieren. Ferner kann zusätzlich oder alternativ vorgesehen sein, auf ein erfasstes zur Deckung bringen hin einen Messvorgang zum Erfassen eines Messwertes auszulösen. So kann ein Vermessen eines rahmenförmigen Objektes, das von seiner Idealform abweicht, weiter deutlich vereinfacht werden.

Gemäß einer weiteren Ausführungsform wird zumindest ein Befestigungshilfsmittel an einem Schnittpunkt der zumindest einen Referenzlinie mit dem rahmenförmigen Objekt an dem rahmenförmigen Objekt zum Befestigen des Distanzmessers befestigt. Das Befestigungsmittel kann zur lösbaren Befestigung an dem rahmenförmigen Objekt und/oder zur lösbaren Befestigung des Distanzmessers an dem Befestigungsmittel ausgebildet sein. Unter einer lösbaren Befestigung wird dabei eine Verbindung von zwei Verbindungspartnern verstanden, die ohne Zerstörung von einem oder beiden der Verbindungspartner gelöst werden kann. Des Weiteren kann die lösbare Befestigung werkzeuglos lösbar ausgebildet sein. Z.B. kann das Befestigungsmittel zur lösbaren Befestigung an dem rahmenförmigen Objekt zum Bilden einer stoffschlüssigen Verbindung ausgebildet sein und einen Haft- oder Klebestreifen aufweisen, der ein rückstandsfreies Lösen erlaubt. Zur lösbaren Befestigung des Distanzmessers an dem Befestigungsmittel hingegen kann das Befestigungsmittel zum Bilden einer kraft- und/oder formschlüssigen Verbindung ausgebildet sein, z.B. unter Verwendung von Magnetkraft, die von einem Dauermagneten bereitgestellt wird. Das zumindest eine Befestigungshilfsmittel fixiert den Distanzmesser zwischenzeitlich für die Bestimmung des jeweiligen Messwertes und erhöht so auch die Genauigkeit der Messung.

Gemäß einer weiteren Ausführungsform wird zum Bestimmen der Mehrzahl von Messwerten der Distanzmesser zum Messen in einer ersten Richtung und zum Messen in einer zweiten, zur ersten Richtung entgegengesetzten Richtung ausgerichtet. Mit anderen Worten, der Distanzmesser wird zwischen einer ersten und einer zweiten oder weiteren Messung einmal um 180° gedreht.

Somit setzt sich eine Messgröße aus einem Messwertepaar zusammen, deren Bestandteil der Messwert in Richtung der ersten Richtung und der Messwert in Richtung der zweiten Richtung ist, wobei beide Messwerte ausgehend von der jeweiligen Referenzlinie als Bezugspunkt gemessen wurden. So können durch ein einfaches Drehen des Distanzmessers zwei Messwerte bestimmt werden. Alternativ kann ein Distanzmesser verwendet werden, der zugleich eine Messung in zwei entgegengesetzte Richtungen erlaubt, also eine zeitgleiche Messung in Richtung der ersten und der zweiten Richtung.

Gemäß einer weiteren Ausführungsform wird zum Bestimmen der Mehrzahl von Messwerten der Distanzmesser zum Messen in einer ersten Richtung und zum Messen in einer weiteren, zur ersten Richtung im rechten Winkel stehenden Richtung ausgerichtet. Mit anderen Worten, der Distanzmesser wird zwischen einer ersten und einer weiteren Messung einmal um 90° gedreht und dann an einer weiteren Referenzlinie eines Laserkreuzes ausgerichtet. So können durch ein einfaches weiteres Drehen des Distanzmessers weitere Messwerte bestimmt werden.

Gemäß einer weiteren Ausführungsform wird zum Bestimmen der Mehrzahl von Messwerten der Distanzmesser zum Messen in einer weiteren, zur weiteren Richtung entgegengesetzten Richtung ausgerichtet wird. Mit anderen Worten, der Distanzmesser wird wieder um 180° gedreht. So können durch ein einfaches Drehen des Distanzmessers nochmals zwei Messwerte bestimmt werden.

Ferner gehören zur Erfindung ein Computerprogrammprodukt für einen Distanzmesser, ein Computerprogrammprodukt für eine Datenverarbeitungseinheit, ein System, ein Distanzmesser für ein derartiges System und eine Datenverarbeitungseinheit für ein derartiges System.

Es wird nun die Erfindung anhand einer Zeichnung erläutert. Es zeigen:
Figur 1 in schematischer Darstellung Komponenten eines Systems zum Vermessen eines rahmenförmigen Objektes.
Figur 2A in schematischer Darstellung einen Messschritt zum Vermessen des in Figur 1 gezeigten rahmenförmigen Objektes.
Figur 2B in schematischer Darstellung einen weiteren Messschritt zum Vermessen des in Figur 1 gezeigten rahmenförmigen Objektes.
Figur 2C in schematischer Darstellung einen weiteren Messschritt zum Vermessen des in Figur 1 gezeigten rahmenförmigen Objektes.
Figur 2D in schematischer Darstellung einen weiteren Messschritt zum Vermessen des in Figur 1 gezeigten rahmenförmigen Objektes.
Figur 2E in schematischer Darstellung einen weiteren Messschritt zum Vermessen des in Figur 1 gezeigten rahmenförmigen Objektes.
Figur 2F in schematischer Darstellung einen weiteren Messschritt zum Vermessen des in Figur 1 gezeigten rahmenförmigen Objektes.
Figur 2G in schematischer Darstellung einen weiteren Messschritt zum Vermessen des in Figur 1 gezeigten rahmenförmigen Objektes.
Figur 2H in schematischer Darstellung einen weiteren Messschritt zum Vermessen des in Figur 1 gezeigten rahmenförmigen Objektes.
Figur 3 in schematischer Darstellung einen Verfahrensablauf zum Betrieb des in den Figuren 1 und 2A bis 2H gezeigten Systems.

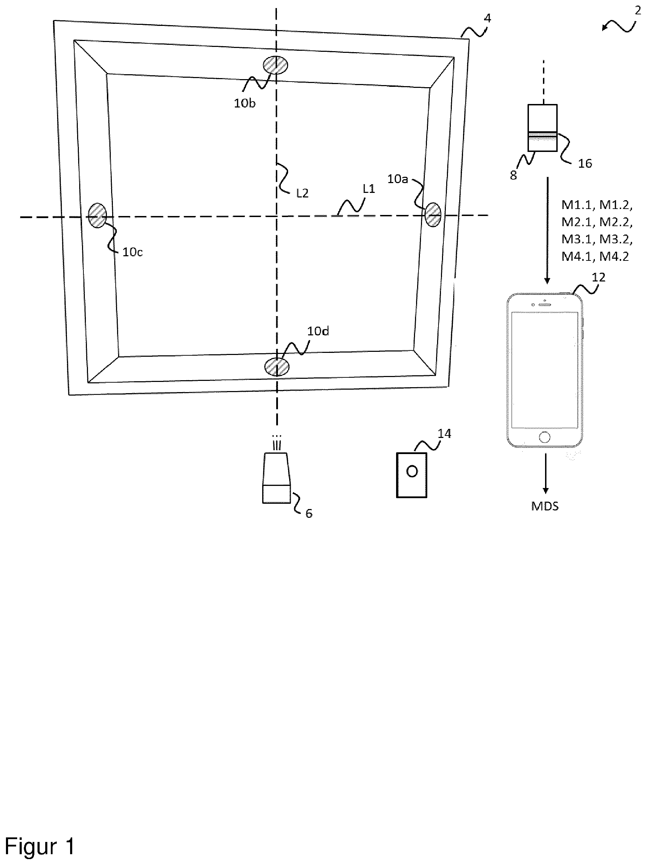

Es wird zunächst auf Figur 1 Bezug genommen.

Dargestellt ist ein System 2 zum Vermessen eines rahmenförmigen Objektes 4. Im vorliegenden Ausführungsbeispiel weist das rahmenförmige Objekt 4 eine rechteckförmige Grundform auf, die von ihrer Idealform abweicht.

Das System 2 weist im vorliegenden Ausführungsbeispiel einen Laser 6, ein Distanzmessgerät 8, Befestigungshilfsmittel 10a, 10b, 10c, 10d, eine Datenverarbeitungseinheit 12 und eine Fernbedienung 14 auf.

Dabei kann das System 2 sowie die genannten Komponenten des Systems 2 für die jeweiligen nachfolgend beschriebenen Aufgaben und/oder Funktionen jeweils Hard- und/oder Software-Komponenten aufweisen.

Der Laser 6 ist im vorliegenden Ausführungsbeispiel ein Kreuzlaser, der ein Laserkreuz, bestehend aus zwei sich kreuzenden Referenzlinien L1, L2, erzeugt. Dabei emittiert der Laser 6 Laserlicht im sichtbaren Wellenlängenbereich.

Das Laserkreuz ist derart angeordnet, dass das Laserkreuz das rahmenförmige Objekt 4 in vier Teile teilt. D.h., die erste Referenzlinie L1 teilt das rahmenförmige Objekt 4 in einen oberen und eine unteren Teil, während die zweite Referenzlinie L2 das rahmenförmige Objekt 4 in einen rechten und einen linken Teil teilt.

Das Distanzmessgerät 8 ist im vorliegenden Ausführungsbeispiel zur kontaktlosen Distanzmessung ausgebildet und führt z.B. eine elektrooptische Entfernungsmessung (auch Abstands-Distanzmessung) oder Laserentfernungsmessung zur elektronischen Entfernungsmessung (EDM) anhand von z.B. Laufzeitmessungen, Phasenlagemessungen oder Lasertriangulation von Licht, z.B. Laserlicht, durch.

Im vorliegenden Ausführungsbeispiel weist der Distanzmesser 8 eine Positioniereinrichtung 16 auf, die ein Ausrichten des Distanzmessers 8 erlaubt oder erleichtert. Die Positioniereinrichtung 16 ist im vorliegenden Ausführungsbeispiel eine linienförmige Aussparung oder Vertiefung, die zur Deckung mit einer der Referenzlinien L1, L2 gebracht werden kann, um den Distanzmesser 8 auszurichten.

Die Positioniereinrichtung 16 ist dabei derart ausgebildet, dass sich eine Messrichtung, in der der Distanzmesser 8 misst, im rechten Winkel zu der Referenzlinie L1, L2 befindet, wenn die Positioniereinrichtung 16 mit dieser Referenzlinie L1, L2 fluchtet. Zusätzlich kann die Positioniereinrichtung 16 dabei derart ausgebildet sein, dass sich die Messrichtung, in der der Distanzmesser 8 misst, mit der Referenzlinie L1, L2 zusammenfällt, wenn die Positioniereinrichtung 16 mit dieser Referenzlinie L1, L2 fluchtet. So können im Bedarfsfall besonders einfach zusätzliche Messwerte aufgenommen werden.

Abweichend vom vorliegenden Ausführungsbeispiel kann die Positioniereinrichtung 16 auch einen oder mehrere Sensoren zur Laserlichtdetektion aufweisen und erfassen, wenn die Positioniereinrichtung 16 zur Deckung mit einer der Referenzlinien L1, L2 gebracht wurde. Zusätzlich kann vorgesehen sein, dass der Distanzmesser 8 auf ein erfasstes zur Deckung bringen hin ein Hinweissignal für den Nutzer erzeugt. Das Hinweissignal kann den Nutzer auf akustischem und/oder optischem und/oder haptischem Wege über das erfolgreiche zur Deckung bringen informieren. Ferner kann zusätzlich oder alternativ vorgesehen sein, dass auf ein erfasstes zur Deckung bringen hin ein Messvorgang ausgelöst wird.

Ferner ist das Distanzmessgerät 8 im vorliegenden Ausführungsbeispiel zur drahtlosen Datenübertragung von Messwerten M1.1, M1.2, M2.1, M2.2, M3.1, M3.2, M4.1, M4.2, die - wie dies später detailliert erläutert wird - mit dem Distanzmessgerät 8 bestimmt wurden, zu der Datenverarbeitungseinheit 12 ausgebildet. Zur Übertragung kann z.B. eine Bluetooth-Verbindung genutzt werden. Abweichend vom vorliegenden Ausführungsbeispiel kann auch eine drahtgebundene Datenübertragung vorgesehen sein.

Die Befestigungshilfsmittel 10a, 10b, 10c, 10d sind im vorliegenden Ausführungsbeispiel zur lösbaren Befestigung an dem rahmenförmigen Objekt 4 und zur lösbaren Befestigung des Distanzmessers 8 an den Befestigungsmitteln 10a, 10b, 10c, 10d ausgebildet. Mit den Befestigungsmitteln 10a, 10b, 10c, 10d kann der Distanzmesser 8 zwischenzeitlich für die Bestimmung der jeweiligen Messwerte M1.1, M1.2, M2.1, M2.2, M3.1, M3.2, M4.1, M4.2, verwendet werden, wie dies ebenfalls später noch detailliert erläutert wird.

Die Datenverarbeitungseinheit 12 ist im vorliegenden Ausführungsbeispiel als Mobilgerät ausgebildet. Unter Mobilgeräten werden dabei Endgeräte verstanden, die aufgrund ihrer Größe und ihres Gewichts ohne größere körperliche Anstrengung tragbar und somit mobil einsetzbar sind. Dabei kann das Mobilgerät als Handheld ausgebildet sein. Unter einem Handheld wird ein tragbares, elektronisches Gerät verstanden, welches über Akkus oder Batterien mit Betriebsenergie versorgt wird und für unterschiedliche Anwendungen genutzt werden kann. Es ist so klein und leicht, dass es bei der Bedienung in nur einer Hand gehalten werden kann. Im vorliegenden Ausführungsbeispiel ist die Datenverarbeitungseinheit 12 ein Handheld, wie ein Smartphone oder Tabletcomputer.

Im Betrieb liest die Datenverarbeitungseinheit 12 die Messwerte M1.1, M1.2, M2.1, M2.2, M3.1, M3.2, M4.1, M4.2 nacheinander ein und fügt sie zu einem Messdatensatz MDS zusammen, wie dies ebenfalls später noch detailliert erläutert wird. Weitere Funktionen der Datenverarbeitungseinheit 12 gemäß dem vorliegenden Ausführungsbeispiel werden ebenfalls später noch detailliert erläutert.

Abweichend vom vorliegenden Ausführungsbeispiel kann die Datenverarbeitungseinheit 12 auch in den Distanzmesser 8 integriert sein, d.h. der Distanzmesser 8 stellt den Messdatensatz MDS mit der Mehrzahl an Messwerten M1.1, M1.2, M2.1, M2.2, M3.1, M3.2, M4.1, M4.2 bereit.

Die Fernbedienung 14 ist im vorliegenden Ausführungsbeispiel zur drahtlosen Steuerung des Systems 2 ausgebildet, insbesondere zur Auslösung eines Messvorgangs zur Erfassung eines der Messwerte M1.1, M1.2, M2.1, M2.2. M3.1, M3.2, M4.1, M4.2 und zur Übertragung zu der Datenverarbeitungseinheit 12.

Abweichend vom vorliegenden Ausführungsbeispiel kann die Datenverarbeitungseinheit 12 auch eine Sprachsteuerung zur Steuerung des Systems 2 aufweisen.

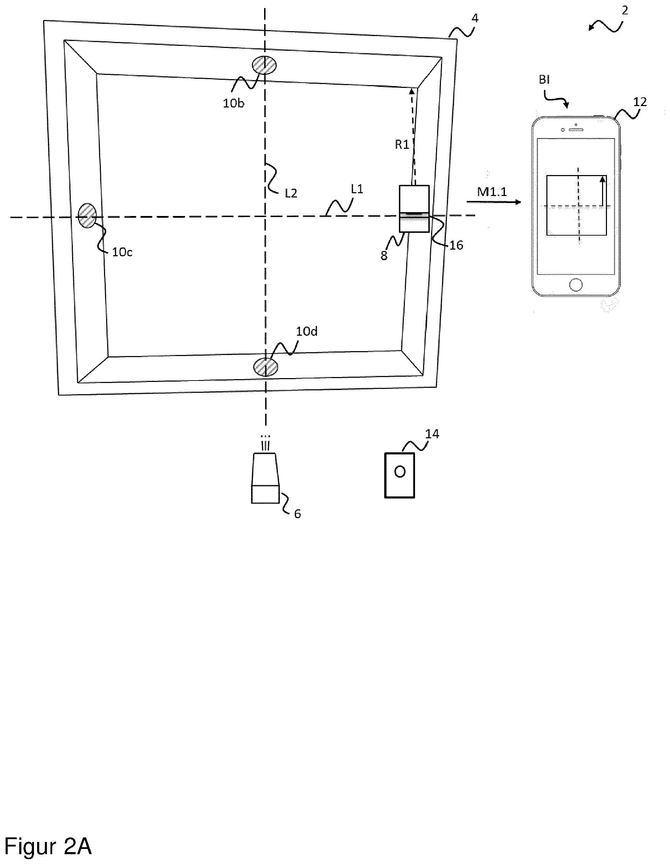

Es wird nun unter zusätzlicher Bezugnahme auf die Figur 2A bis 2H das Vermessen des rahmenförmigen Objektes 4 mit dem System 2 erläutert.

Wie in Figur 2A dargestellt, werden mit dem Laser 6 die Referenzlinien L1, L2 erzeugt. Die Befestigungshilfsmittel 10a, 10b, 10c, 10d sind an jeweiligen Schnittpunkten der jeweiligen Referenzlinie L1, L2 mit dem rahmenförmigen Objekt 4 an diesem befestigt. Abweichend vom vorliegenden Ausführungsbeispiel können auch die beiden Referenzlinien L1, L2 nacheinander erzeugt werden. Ferner können auch eines oder mehrere der Befestigungsmittel 10a, 10b, 10c, 10d nacheinander an den im Folgenden beschriebenen Positionen angebracht werden.

Der Nutzer erhält nun durch entsprechende Bildschirminhalte BI, die auf dem Bildschirm der als Smartphone ausgebildeten Datenverarbeitungseinheit 12 wiedergegeben werden, Hinweise, welche weiteren Messschritte auszuführen sind.

Im vorliegenden Ausführungsbeispiel wird durch in die Bildschirminhalte BI eingeblendeten Pfeile symbolisiert, entlang welcher Strecke die nächste Messung durchzuführen ist.

Die nacheinander wiedergegebenen Bildschirminhalte BI können als ein Messprogramm bzw. als Anleitung zum Durchführen der Messschritte aufgefasst werden. Im vorliegenden Ausführungsbeispiel dienen die nacheinander wiedergegebenen Bildschirminhalte BI zum Vermessen des rahmenförmigen Objekts 4 mit einer rechteckförmige Grundform. Abweichend vom vorliegenden Ausführungsbeispiel können die nacheinander wiedergegebenen Bildschirminhalte BI auch zum Vermessen von rahmenförmigen Objekten 4 mit anderen Grundformen, wie dreieckförmigen, mindestens fünfeckförmigen, kreisförmigen oder ellipsenförmigen Grundformen ausgebildet sein. Mit anderen Worten, es sind eine Mehrzahl von Messprogrammen bzw. Anleitungen zum Durchführen der Messschritte für verschiedene Grundformen z.B. auf der als Smartphone ausgebildeten Datenverarbeitungseinheit 12 archiviert und werden von dem Nutzer zu Beginn der Vermessung ausgewählt. Zusätzlich oder alternativ kann auch vorgesehen sein, dass z.B. die als Smartphone ausgebildeten Datenverarbeitungseinheit 12 eine Kamera aufweist, mit der ein Bilddatensatz repräsentativ für das zu vermessende rahmenförmige Objekt 4 erzeugt werden kann. Der Bilddatensatz wird anschließend ausgewertet, um die Grundform zu bestimmen und ein geeignetes Messprogramm bzw. eine geeignete Anleitung zum Durchführen der Messschritte aus der Mehrzahl von Messprogrammen bzw. Anleitungen zum Durchführen der Messschritte auszuwählen oder dem Nutzer zur Auswahl vorzuschlagen. Die Reihenfolge dieser Messschritte kann vorbestimmt und unveränderbar sein. Es kann aber auch sein, dass der Nutzer die Reihenfolge dieser Messschritte vorab frei konfigurieren und somit weitere Messprogramme bzw. Anleitungen zum Durchführen der Messschritte selbst erstellen kann.

Als erstes soll der Abstand von der Referenzlinie L1 bis zur oberen Innenseite des rahmenförmigen Objektes 4 in Richtung der Richtung R1 bestimmt werden.

In Figur 2A ist dargestellt, dass der Distanzmesser 6 bereits derart an dem Befestigungsmittel 10a befestigt ist, dass die Referenzlinie L1 mit der Positioniereinrichtung 16 fluchtet.

Durch Betätigen der Fernsteuerung 14 wird ein Messvorgang ausgelöst, mit dem ein Wert für den Abstand von der Referenzlinie L1 bis zur oberen Innenseite des rahmenförmigen Objektes 4 in Form des Messwertes M1.1 erfasst wird.

Der Messwert M1.1 wird von dem Distanzmesser 6 zu der Datenverarbeitungseinheit 12 übertragen und in den dargestellten Bildschirminhalten BI eingebettet, um zu visualisieren, dass der Messwert M1.1 erfasst wurde. Hierzu kann z.B. die Größe des erfassten Messwertes M1.1 eingeblendet werden (nicht dargestellt).

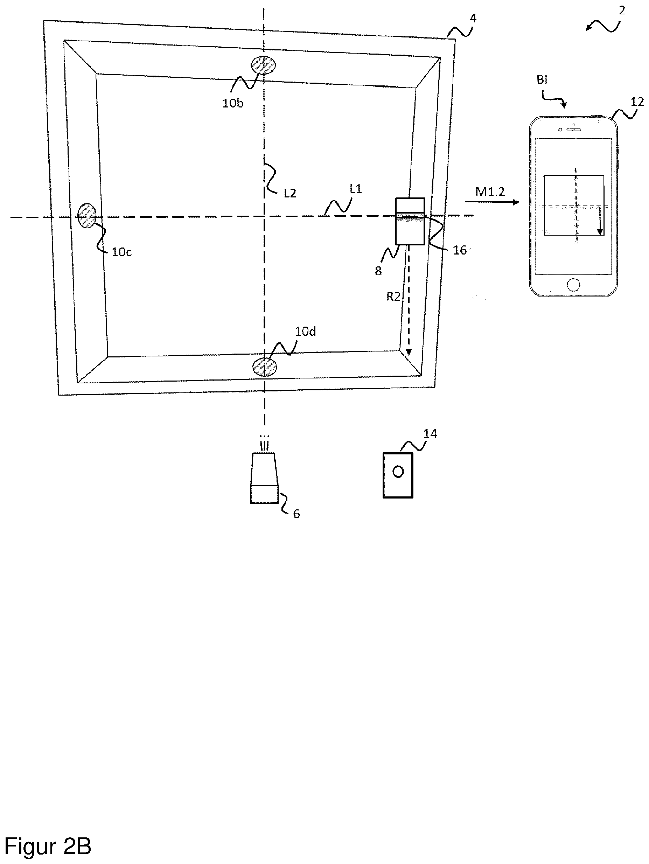

In Figur 2B ist dargestellt, dass gemäß den dargestellten Bildschirminhalten BI der Abstand von der Referenzlinie L1 bis zur unteren Innenseite des rahmenförmigen Objektes 4 in einer zur Richtung R1 entgegengesetzten Richtung R2 bestimmt werden soll.

Hierzu wird der Distanzmesser 6 von dem Befestigungsmittel 10a gelöst, um 180° gedreht und wieder derart an dem Befestigungsmittel 10a befestigt, dass die Referenzlinie L1 wieder mit der Positioniereinrichtung 16 fluchtet.

Durch Betätigen der Fernsteuerung 14 wird ein weiterer Messvorgang ausgelöst, mit dem ein Wert für den Abstand von der Referenzlinie L1 bis zur unteren Innenseite des rahmenförmigen Objektes 4 in Form des Messwertes M1.2 erfasst wird.

Auch der Messwert M1.2 wird von dem Distanzmesser 6 zu der Datenverarbeitungseinheit 12 übertragen und in den dargestellten Bildschirminhalten BI eingebettet, um zu visualisieren, dass der Messwert M1.2 erfasst wurde. Hierzu kann z.B. die Größe des erfassten Messwertes M1.2 eingeblendet werden (nicht dargestellt).

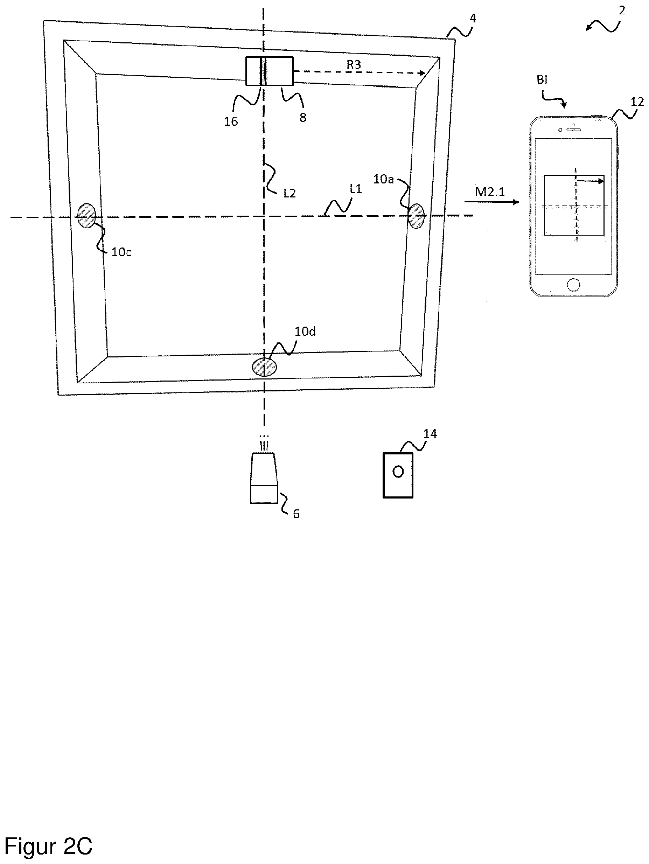

In Figur 2C ist dargestellt, dass gemäß den dargestellten Bildschirminhalten BI der Abstand von der Referenzlinie L2 bis zur rechten Innenseite des rahmenförmigen Objektes 4 in einer weiteren, zur ersten Richtung R1 im rechten Winkel stehenden weiteren Richtung R3 bestimmt werden soll.

Hierzu wird der Distanzmesser 6 von dem Befestigungsmittel 10a gelöst, um 90° gedreht und derart an dem Befestigungsmittel 10b befestigt, dass die Referenzlinie L2 mit der Positioniereinrichtung 16 fluchtet.

Durch Betätigen der Fernsteuerung 14 wird ein weiterer Messvorgang ausgelöst, mit dem ein Wert für den Abstand von der Referenzlinie L2 bis zur linken Innenseite des rahmenförmigen Objektes 4 in Form des Messwertes M2.1 erfasst wird.

Auch der Messwert M2.1 wird von dem Distanzmesser 6 zu der Datenverarbeitungseinheit 12 übertragen und in den dargestellten Bildschirminhalten BI eingebettet, um zu visualisieren, dass der Messwert M2.1 erfasst wurde. Hierzu kann z.B. die Größe des erfassten Messwertes M2.1 eingeblendet werden (nicht dargestellt).

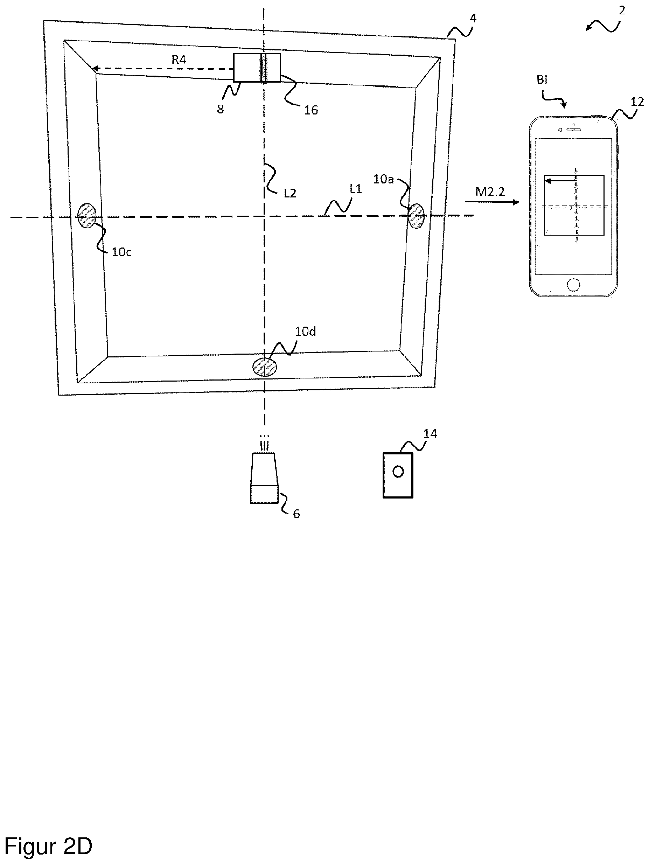

In Figur 2D ist dargestellt, dass gemäß den dargestellten Bildschirminhalten BI nun der Abstand von der Referenzlinie L2 bis zur linken Innenseite des rahmenförmigen Objektes 4 in einer zur Richtung R3 entgegengesetzten Richtung R4 bestimmt werden soll.

Hierzu wird der Distanzmesser 6 von dem Befestigungsmittel 10b gelöst, um 180° gedreht und wieder derart an dem Befestigungsmittel 10b befestigt, dass die Referenzlinie L2 wieder mit der Positioniereinrichtung 16 fluchtet.

Durch Betätigen der Fernsteuerung 14 wird ein weiterer Messvorgang ausgelöst, mit dem ein Wert für den Abstand von der Referenzlinie L2 bis zur linken Innenseite des rahmenförmigen Objektes 4 in Form des Messwertes M2.2 erfasst wird.

Auch der Messwert M2.2 wird von dem Distanzmesser 6 zu der Datenverarbeitungseinheit 12 übertragen und in den dargestellten Bildschirminhalten BI eingebettet, um zu visualisieren, dass der Messwert M2.2 erfasst wurde. Hierzu kann z.B. die Größe des erfassten Messwertes 2.2 eingeblendet werden (nicht dargestellt).

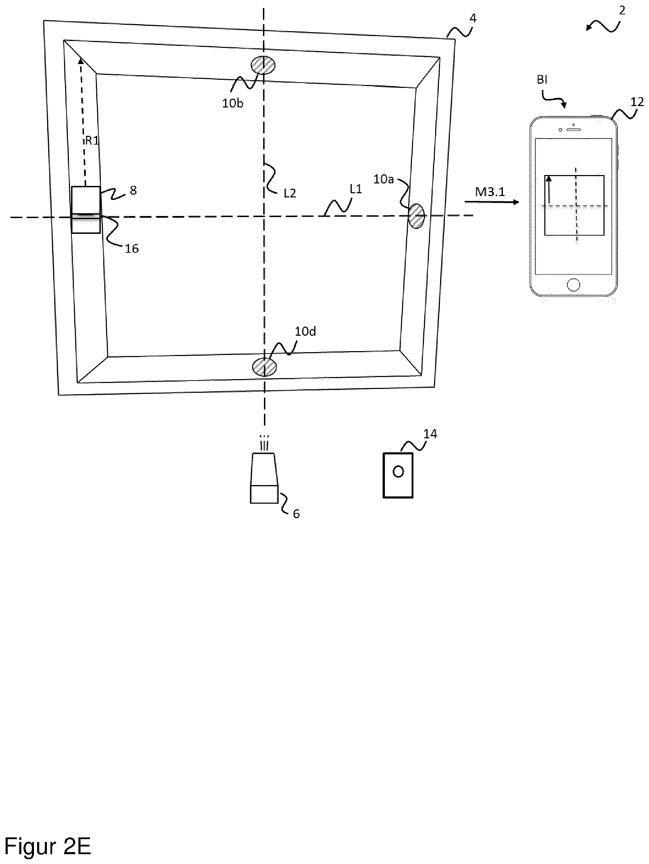

In Figur 2E ist dargestellt, dass gemäß den dargestellten Bildschirminhalten BI der Abstand von der Referenzlinie L1 bis zur oberen Innenseite des rahmenförmigen Objektes 4 in Richtung der Richtung R1 bestimmt werden soll.

Hierzu wird der Distanzmesser 6 von dem Befestigungsmittel 10b gelöst, um 90° gedreht und derart an dem Befestigungsmittel 10c befestigt, dass die Referenzlinie L1 mit der Positioniereinrichtung 16 fluchtet.

Durch Betätigen der Fernsteuerung 14 wird ein weiterer Messvorgang ausgelöst, mit dem ein Wert für den Abstand von der Referenzlinie L1 bis zur oberen Innenseite des rahmenförmigen Objektes 4 in Form des Messwertes M3.1 erfasst wird.

Auch der Messwert M3.1 wird von dem Distanzmesser 6 zu der Datenverarbeitungseinheit 12 übertragen und in den dargestellten Bildschirminhalten BI eingebettet, um zu visualisieren, dass der Messwert M3.1 erfasst wurde. Hierzu kann z.B. die Größe des erfassten Messwertes M3.1 eingeblendet werden (nicht dargestellt).

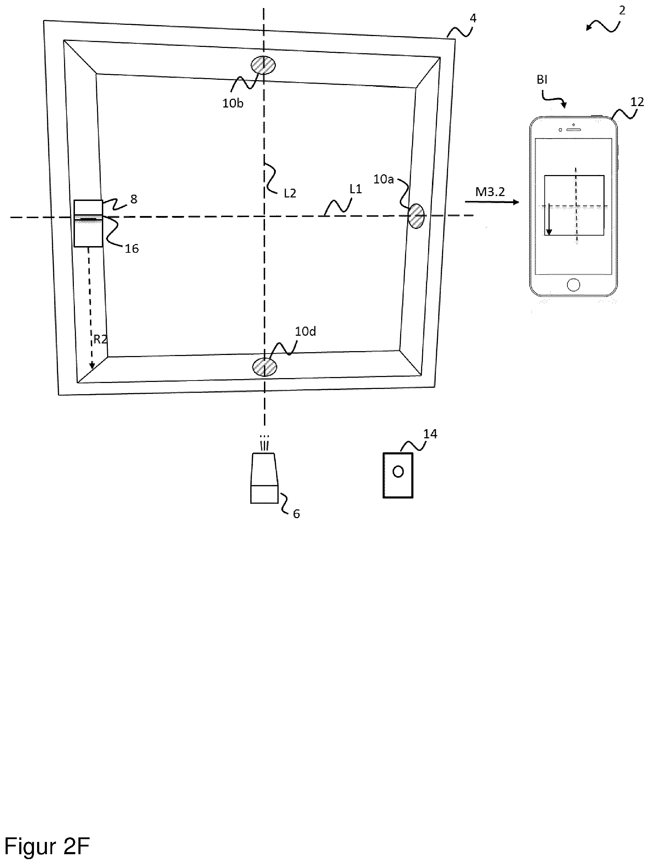

In Figur 2F ist dargestellt, dass gemäß den dargestellten Bildschirminhalten BI der Abstand von der Referenzlinie L1 bis zur unteren Innenseite des rahmenförmigen Objektes 4 in Richtung der Richtung R2 bestimmt werden soll.

Hierzu wird der Distanzmesser 6 von dem Befestigungsmittel 10c gelöst, um 180° gedreht und wieder derart an dem Befestigungsmittel 10c befestigt, dass die Referenzlinie L1 wieder mit der Positioniereinrichtung 16 fluchtet.

Durch Betätigen der Fernsteuerung 14 wird ein weiterer Messvorgang ausgelöst, mit dem ein Wert für den Abstand von der Referenzlinie L1 bis zur unteren Innenseite des rahmenförmigen Objektes 4 in Form des Messwertes M3.2 erfasst wird.

Auch der Messwert M3.2 wird von dem Distanzmesser 6 zu der Datenverarbeitungseinheit 12 übertragen und in den dargestellten Bildschirminhalten BI eingebettet, um zu visualisieren, dass der Messwert M3.2 erfasst wurde. Hierzu kann z.B. die Größe des erfassten Messwertes M3.2 eingeblendet werden (nicht dargestellt).

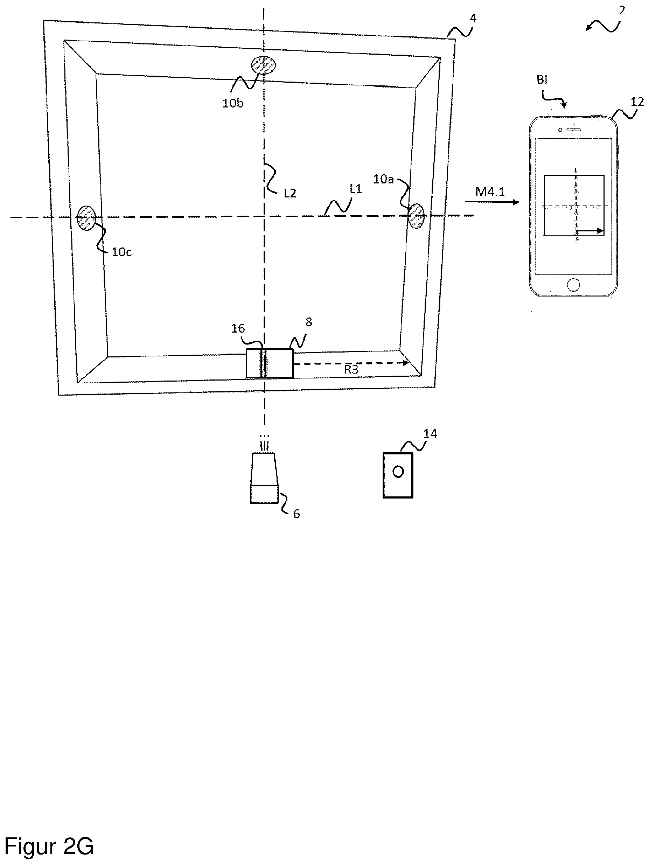

In Figur 2G ist dargestellt, dass gemäß den dargestellten Bildschirminhalten BI der Abstand von der Referenzlinie L2 bis zur rechten Innenseite des rahmenförmigen Objektes 4 in Richtung der Richtung R3 bestimmt werden soll.

Hierzu wird der Distanzmesser 6 von dem Befestigungsmittel 10c gelöst, um 90° gedreht und derart an dem Befestigungsmittel 10d befestigt, dass die Referenzlinie L2 mit der Positioniereinrichtung 16 fluchtet.

Durch Betätigen der Fernsteuerung 14 wird ein weiterer Messvorgang ausgelöst, mit dem ein Wert für den Abstand von der Referenzlinie L2 bis zur rechten Innenseite des rahmenförmigen Objektes 4 in Form des Messwertes M4.1 erfasst wird.

Auch der Messwert M4.1 wird von dem Distanzmesser 6 zu der Datenverarbeitungseinheit 12 übertragen und in den dargestellten Bildschirminhalten BI eingebettet, um zu visualisieren, dass der Messwert M4.1 erfasst wurde. Hierzu kann z.B. die Größe des erfassten Messwertes M4.1 eingeblendet werden (nicht dargestellt).

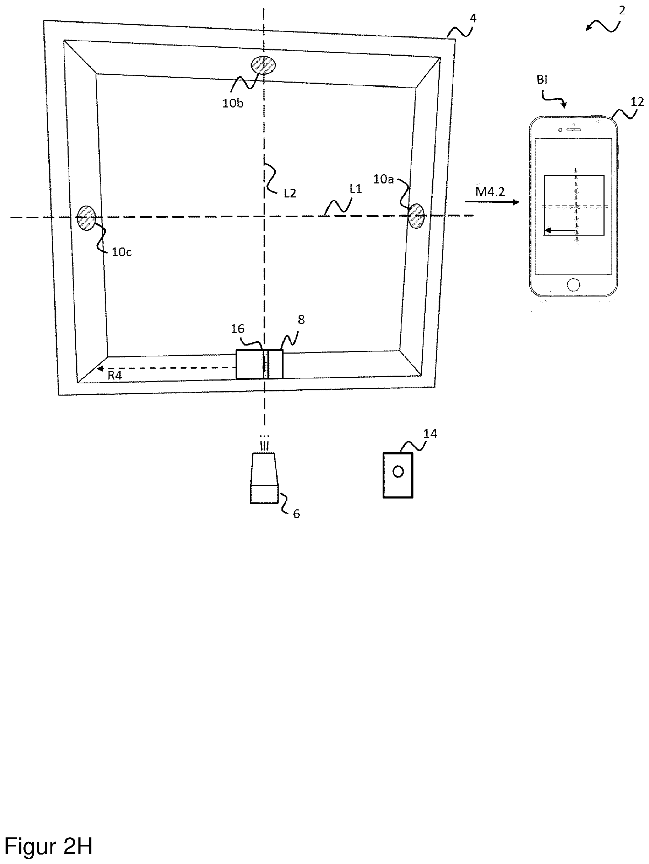

In Figur 2H ist dargestellt, dass gemäß den dargestellten Bildschirminhalten BI der Abstand von der Referenzlinie L2 bis zur linken Innenseite des rahmenförmigen Objektes 4 in Richtung der Richtung R4 bestimmt werden soll.

Hierzu wird der Distanzmesser 6 von dem Befestigungsmittel 10d gelöst, um 180° gedreht und derart wieder an dem Befestigungsmittel 10d befestigt, dass die Referenzlinie L2 mit der Positioniereinrichtung 16 fluchtet.

Durch Betätigen der Fernsteuerung 14 wird ein weiterer Messvorgang ausgelöst, mit dem ein Wert für den Abstand von der Referenzlinie L2 bis zur linken Innenseite des rahmenförmigen Objektes 4 in Form des Messwertes M4.2 erfasst wird.

Auch der Messwert M4.2 wird von dem Distanzmesser 6 zu der Datenverarbeitungseinheit 12 übertragen und in den dargestellten Bildschirminhalten BI eingebettet, um zu visualisieren, dass der Messwert M4.2 erfasst wurde. Hierzu kann z.B. die Größe des erfassten Messwertes M4.2 eingeblendet werden (nicht dargestellt).

Schließlich werden die Messwerte M1.1, M1.2, M2.1, M2.2, M3.1, M3.2, M4.1, M4.2 von der Datenverarbeitungseinheit 12 zu einem Messdatensatz MDS zusammengefügt, um z.B. eine Datei im pdf-Format zu erzeugen, die repräsentativ für eine grafische Darstellung der Messergebnisse analog zu den dargestellten Bildschirminhalten BI der Vermessung des rahmenförmigen Objektes 4 ist.

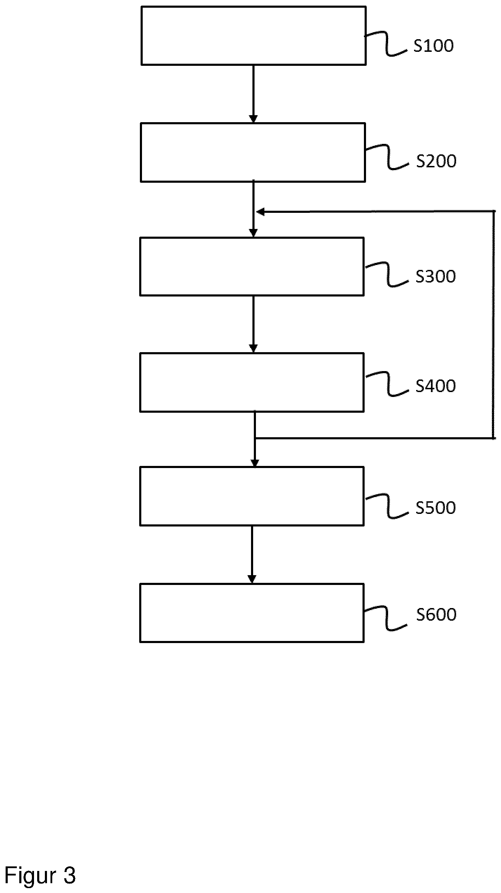

Es wird nun unter zusätzlicher Bezugnahme auf die Figur 3 ein Verfahren zum Betrieb des Systems 2 erläutert.

In einem ersten Schritt S100 werden die das rahmenförmige Objekt 4 schneidenden, optisch sichtbaren Referenzlinien L1, L2 mit dem Laser 6 erzeugt.

In einem weiteren Schritt S200 werden die Befestigungshilfsmittel 10a, 10b, 10c, 10d an ihren Schnittpunkten der jeweiligen Referenzlinien L1, L2 mit dem rahmenförmigen Objekt 4 an diesem befestigt.

In einem weiteren Schritt S300 wird der Distanzmesser 8 an der jeweiligen Referenzlinie L1, L2 ausgerichtet.

In einem weiteren Schritt S400 wird ein erster der Mehrzahl von Messwerten M1.1, M1.2, M2.1, M2.2, M3.1, M3.2, M4.1, M4.2 mit dem Distanzmesser 8 bestimmt.

Dabei werden die Schritte S300 und S400 wie anhand der Figuren 2A bis 2H solange wiederholt, bis alle Messwerte der Mehrzahl von Messwerten M1.1, M1.2, M2.1, M2.2, M3.1, M3.2, M4.1, M4.2 bestimmt wurden.

Dies kann umfassen, dass zum Bestimmen der Mehrzahl von Messwerten M1.1, M1.2, M2.1, M2.2, M3.1, M3.2, M4.1, M4.2 der Distanzmesser 8 zum Messen in einer ersten Richtung R1 und zum Messen in einer zweiten, zur ersten Richtung R1 entgegengesetzten Richtung R2 ausgerichtet wird.

Ferner kann dies umfassen, dass zum Bestimmen der Mehrzahl von Messwerten M1.1, M1.2, M2.1, M2.2, M3.1, M3.2, M4.1, M4.2 der Distanzmesser 8 zum Messen in einer ersten Richtung R1 und zum Messen in einer weiteren, zur ersten Richtung im rechten Winkel stehenden Richtung R3 ausgerichtet wird.

Schließlich kann dies umfassen, dass zum Bestimmen der Mehrzahl von Messwerten M1.1, M1.2, M2.1, M2.2, M3.1, M3.2, M4.1, M4.2 der Distanzmesser 8 zum Messen in einer weiteren, zur weiteren Richtung R3 entgegengesetzten Richtung R4 ausgerichtet wird.

In einem weiteren Schritt S500 werden die Messwerte M1.1, M1.2, M2.1, M2.2, M2.2, M3.1, M3.2, M4.1, M4.2 von der Datenverarbeitungseinheit 12 zu einem Messdatensatz MDS zusammengefügt.

In einem weiteren Schritt S600 wird der Messdatensatz MDS zur weiteren Verarbeitung und/oder Auswertung zu einem weiteren Endgerät übertragen, z.B. mittels einer drahtlosen Internetverbindung.

Abweichend vom vorliegenden Ausführungsbeispiel kann die Reihenfolge der Schritte auch eine andere sein. Ferner können mehrere Schritte auch zeitgleich bzw. simultan ausgeführt werden. Des Weiteren können auch abweichend vom vorliegenden Ausführungsbeispiel einzelne Schritte übersprungen oder ausgelassen werden.

So kann ein Vermessen eines rahmenförmigen Objektes 4, das von seiner Idealform abweicht, deutlich vereinfacht werden.

### Bezugszeichenliste

- 2: System
- 4: Rahmenförmiges Objekt
- 6: Laser
- 8: Distanzmessgerät bzw. Distanzmesser
- 10a: Befestigungshilfsmittel
- 10b: Befestigungshilfsmittel
- 10c: Befestigungshilfsmittel
- 10d: Befestigungshilfsmittel
- 12: Datenverarbeitungseinheit
- 14: Fernbedienung
- 16: Positioniereinrichtung

- BI: Bildschirminhalte
- L1: Referenzlinie
- L2: Referenzlinie
- R1: Richtung
- R2: Richtung
- R3: Richtung
- R4: Richtung

- S100: Schritt
- S200: Schritt
- S300: Schritt
- S400: Schritt
- S500: Schritt
- S600: Schritt

## Patentansprüche

1. Verfahren zum Vermessen eines rahmenförmigen Objektes (4), mit den Schritten:
(S100) Erzeugen zumindest einer das rahmenförmige Objekt (4) schneidenden, optisch sichtbaren Referenzlinie (L1, L2),
(S300) Ausrichten eines Distanzmessers (8) an der zumindest einen Referenzlinie (L1, L2),
(S400) Bestimmen einer Mehrzahl von Messwerten (M1.1, M1.2, M2.1, M2.2, M3.1, M3.2, M4.1, M4.2) mit dem Distanzmesser (8),
(S500) Zusammenfassen der Mehrzahl von Messwerten (M1.1, M1.2, M2.1, M2.2, M3.1, M3.2, M4.1, M4.2) zu einem Messdatensatz (MDS).

2. Verfahren nach Anspruch 1, wobei zum Ausrichten des Distanzmessers (8) an der zumindest einen Referenzlinie (L1, L2) eine Positioniereinrichtung (16) des Distanzmessers (8) verwendet wird.

3. Verfahren nach Anspruch 1 oder 2, wobei zumindest ein Befestigungshilfsmittel (10a, 10b, 10c, 10d) an einem Schnittpunkt der zumindest einen Referenzlinie (L1, L2) mit dem rahmenförmigen Objekt (4) an dem rahmenförmigen Objekt (4) zum Befestigen des Distanzmessers (8) befestigt wird.

4. Verfahren nach einem der Ansprüche 1 bis 3, wobei zum Bestimmen der Mehrzahl von Messwerten (M1.1, M1.2, M2.1, M2.2, M3.1, M3.2, M4.1, M4.2) der Distanzmesser (8) zum Messen in einer ersten Richtung (R1) und zum Messen in einer zweiten, zur ersten Richtung (R1) entgegengesetzten Richtung (R2) ausgerichtet wird.

5. Verfahren nach einem der Ansprüche 1 bis 4, wobei zum Bestimmen der Mehrzahl von Messwerten (M1.1, M1.2, M2.1, M2.2, M3.1, M3.2, M4.1, M4.2) der Distanzmesser (8) zum Messen in einer ersten Richtung (R1) und zum Messen in einer weiteren, zur ersten Richtung im rechten Winkel stehenden Richtung (R3) ausgerichtet wird.

6. Verfahren nach Anspruch 5, wobei zum Bestimmen der Mehrzahl von Messwerten (M1.1, M1.2, M2.1, M2.2, M3.1, M3.2, M4.1, M4.2) der Distanzmesser (8) zum Messen in einer weiteren, zur weiteren Richtung (R3) entgegengesetzten Richtung (R4) ausgerichtet wird.

7. Computerprogrammprodukt für einen Distanzmesser (8), ausgebildet zum Ausführen eines Verfahrens nach einem der Ansprüche 1 bis 6.

8. Computerprogrammprodukt für eine Datenverarbeitungseinheit (12), ausgebildet zum Ausführen eines Verfahrens nach einem der Ansprüche 1 bis 6.

9. System (2) zum Vermessen eines rahmenförmigen Objektes (4), mit einem Laser (6) zum Erzeugen zumindest einer das rahmenförmige Objekt (4) schneidenden, optisch sichtbaren Referenzlinie (L1, L2), mit einem Distanzmesser (8) zum Ausrichten an der zumindest einen Referenzlinie (L1, L2), wobei das System (2) dazu ausgebildet ist, eine Mehrzahl von Messwerten (M1.1, M1.2, M2.1, M2.2, M3.1, M3.2, M4.1, M4.2) mit dem Distanzmesser (8) zu bestimmen und die Mehrzahl von Messwerten (M1.1, M1.2, M2.1, M2.2, M3.1, M3.2, M4.1, M4.2) zu einem Messdatensatz (MDS) zusammenzufassen.

10. System (2) nach Anspruch 9, wobei der Distanzmesser (8) eine Positioniereinrichtung (16) zum Ausrichten an der zumindest einen Referenzlinie (L1, L2) aufweist.

11. System (2) nach Anspruch 9 oder 10, wobei das System (2) zumindest ein Befestigungshilfsmittel (10a, 10b, 10c, 10d) zum Befestigen an einem Schnittpunkt der zumindest einen Referenzlinie (L1, L2) mit dem rahmenförmigen Objekt (4) zum Befestigen des Distanzmessers (8) aufweist.

12. System (2) nach einem der Ansprüche 9 bis 11, wobei zum Bestimmen der Mehrzahl von Messwerten (M1.1, M1.2, M2.1, M2.2, M3.1, M3.2, M4.1, M4.2) der Distanzmesser (8) zum Messen in einer ersten Richtung (R1) und zum Messen in einer zweiten, zur ersten Richtung (R1) entgegengesetzten Richtung (R2) ausrichtbar ist.

13. System (2) nach einem der Ansprüche 9 bis 12, wobei zum Bestimmen der Mehrzahl von Messwerten (M1.1, M1.2, M2.1, M2.2, M3.1, M3.2, M4.1, M4.2) der Distanzmesser (8) zum Messen in einer ersten Richtung (R1) und zum Messen in einer weiteren, zur ersten Richtung im rechten Winkel stehenden Richtung (R3) ausrichtbar ist.

14. System (2) nach Anspruch 13, wobei zum Bestimmen der Mehrzahl von Messwerten (M1.1, M1.2, M2.1, M2.2, M3.1, M3.2, M4.1, M4.2) der Distanzmesser (8) zum Messen in einer weiteren, zur weiteren Richtung (R3) entgegengesetzten Richtung (R4) ausrichtbar ist.

15. Distanzmesser (8) für ein System (2) nach einem der Ansprüche 9 bis 14.

16. Datenverarbeitungseinheit (12)) für ein System (2) nach einem der Ansprüche 9 bis 14.
